# EUROPEAN PATENT APPLICATION

(11) **EP 3 686 654 A1**
(43) Date of publication of application: **29.07.2020**
(21) Application number: 18857486.7
(22) Date of filing: 19.09.2018
(51) Int. Cl.: G02C 11/00, G02B 27/02, G02C 5/14, G02F 1/13

(54) **EYEWEAR, ELECTRICITY SUPPLY DEVICE FOR EYEWEAR AND EYEWEAR SET**

(30) Priority: 21.09.2017 JP 2017181494
(71) Applicant: Mitsui Chemicals, Inc., Minato-ku Tokyo 105-7122 (JP)
(72) Inventor: KAN, Ryuki, Aichi 457-8522 (JP); OHTO, Takafumi, Aichi 457-8522 (JP); HINO, Masayoshi, Aichi 457-8522 (JP)
(74) Representative: Epping - Hermann - Fischer
(86) International application number: PCT/JP2018/034603
(87) International publication number: WO 2019/059220

(57) **Abstract**

This eyewear is provided with: a front having a nose contact part; a temple, one end of which is coupled to one end of the front via a coupling part; an electric device; and a noncontact electricity reception part that receives, from outside, electricity to be supplied to the electric device, wherein the noncontact electricity reception part is disposed in a region located within the temple, and the length between the noncontact electricity reception part and the hinge is shorter than the length between the nose contact part and the hinge.

## Description

### Technical Field

The present invention relates to an eyewear, and more particularly, to an eyewear equipped with an electrical device, an eyewear power feeding apparatus adapted to supply electricity to the eyewear, and an eyewear set, which is a set of the eyewear and eyewear power feeding apparatus.

### Background Art

Conventionally, an eyewear equipped with an electrical device is used in various applications. A pair of 3D glasses, which is an example of an eyewear, is disclosed in Patent Literature (hereinafter, abbreviated as PTL) 1.

The pair of 3D glasses includes a contactless power receiving section, which receives electric power from a contactless power feeding section in a contactless manner.

### Citation List

### Patent Literature

PTL 1
U.S. Patent Application Ser. No. 2011/255160

### Summary of Invention

### Technical Problem

However, the pair of 3D glasses disclosed in PTL 1 has a relatively large contactless power receiving section. The contactless power receiving section is placed in a relatively large wall portion provided in an end portion of a front. This structure limits a lateral field of view and imposes design constraints. Thus, this structure is difficult to utilize for an eyewear other than 3D glasses having the specific purpose of watching a front display on which a 3D image is displayed.

The present invention has been made in view of the above circumstances and has an object to provide an eyewear having a relatively small contactless power receiving section.

Also, an object of the present invention is to provide an eyewear power feeding apparatus capable of feeding electric power to eyewear having a relatively small contactless power receiving section.

### Solution to Problem

An eyewear according to the present invention includes: a front having a nose-abutting portion; a temple coupled to a first end portion of the front at a first end portion of the temple via a coupling section; an electrical device; a power storage section that supplies electricity to the electrical device; a contactless power receiving section that supplies electricity to the power storage section, in which the contactless power receiving section is placed in a region in the temple, and a length between the contactless power receiving section and in which the coupling section is shorter than a length between the nose-abutting portion and the coupling section.

An eyewear power feeding apparatus according to the present invention includes: a positioning section that positions an eyewear which includes a temple incorporating a contactless power receiving section, and a front coupled to a first end portion of the temple at a first end portion of the front via a coupling section; and a contactless power feeding section, in which the positioning section positions the eyewear such that the contactless power receiving section faces the contactless power feeding section, by abutting at least one of the first end portion of the temple, the coupling section, and the first end portion of the front.

### Advantageous Effects of Invention

The present invention can provide an eyewear having a relatively small contactless power receiving section. Also, the present invention can provide an eyewear power feeding apparatus capable of feeding electric power to an eyewear having a relatively small contactless power receiving section.

### Brief Description of Drawings

FIG. 1 is a front view of electronic glasses;
FIG. 2 is a partial cut-away plan view of the electronic glasses;
FIG. 3 is a partial cut-away left side view of the electronic glasses;
FIG. 4 is a perspective view of an eyewear power feeding apparatus;
FIG. 5 is a partial cut-away plan view of the eyewear power feeding apparatus;
FIG. 6 is a partial cut-away front view of the eyewear power feeding apparatus;
FIG. 7A is a plan view of a variation of the eyewear power feeding apparatus;
FIG. 7B is a plan view of another variation of the eyewear power feeding apparatus;
FIG. 7C is a plan view of still another variation of the eyewear power feeding apparatus;
FIG. 7D is a plan view of yet another variation of the eyewear power feeding apparatus;
FIG. 8 is a plan view of a spectacle case having the eyewear power feeding apparatus;
FIG. 9 is a plan view showing a variation of the eyewear power feeding apparatus adapted to feed electric power to the electronic glasses whose temples are unfolded;
FIG. 10 is a perspective view of an eyewear power feeding apparatus according to another embodiment;
FIG. 11 is a front view of the eyewear power feeding apparatus according to the other embodiment;
FIG. 12 is a right side view of the eyewear power feeding apparatus according to the other embodiment; and
FIG. 13 is a partial cut-away front view of the eyewear power feeding apparatus according to the other embodiment.

### Description of Embodiments

Embodiments of the present invention will be described in detail below with reference to the accompanying drawings. In the following, as a representative example of the eyewear according to the present invention, description will be given of electronic glasses having transparent vision correction lenses including liquid crystal lenses (electroactive areas) whose optical properties can be changed by electric control. Electronic glasses according to the present embodiment include liquid crystal lenses as electrical devices.

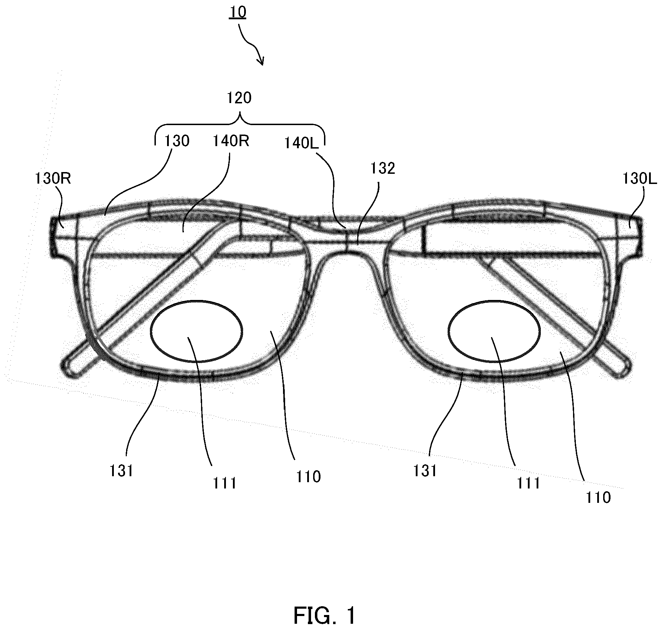

FIG. 1 is a front view of electronic glasses 10 according to the present embodiment. Electronic glasses 10 include a pair of lenses 110 and frame 120. Frame 120 includes front 130, left temple 140L, and right temple 140R. FIG. 1 shows a state in which the temples are folded. In the following description, it is assumed that the side on which front 130 is placed is the front side of electronic glasses 10 while the side on which the temples are placed is the rear side of electronic glasses 10.

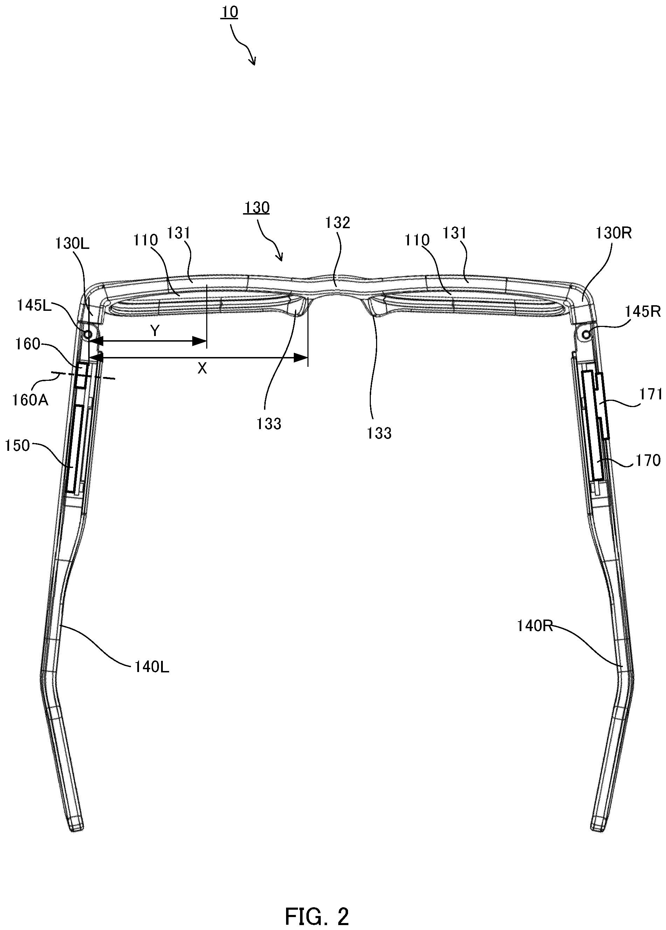

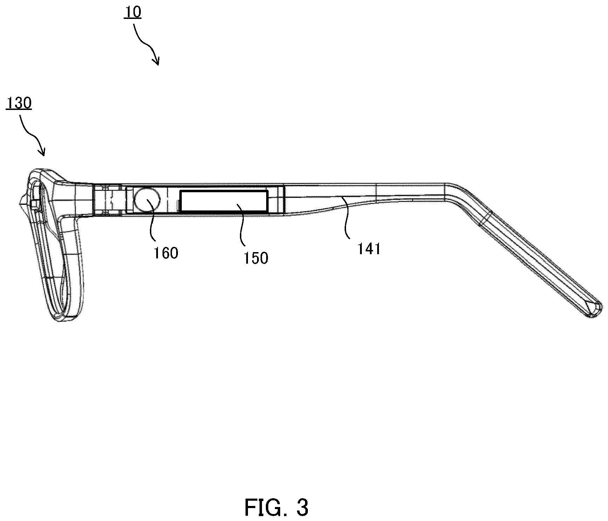

FIG. 2 is a plan view of electronic glasses 10. FIG. 3 is a left side view of electronic glasses 10. In FIGS. 2 and 3, front parts of both temples are shown as being transparent, showing members located inside the front parts as well. FIGS. 2 and 3 show the electronic glasses with the temples unfolded.

The pair of lenses 110 is formed in such a way as to be approximately symmetrical when electronic glasses 10 are seen from the front, and the lenses have identical components. Each of lenses 110 includes liquid crystal lens 111 and a pair of non-illustrated electrodes. Liquid crystal lens 111 has a multilayer structure and a pair of electrically conductive layers (not shown) sandwiching at least a liquid crystal layer (not shown) from the front and rear. The pair of electrically conductive layers are connected to respective electrodes. By applying a voltage across the pair of electrically conductive layers, it is possible to activate the liquid crystal layer and change the refractive index of liquid crystal lenses 111. Note that a transparent electrode such as ITO is used as electrode.

Lenses 110 are formed by being cut from lens blank so as to conform to the shapes of rims 131 described later.

Front 130 making up frame 120 includes a pair of rims 131 holding a pair of lenses 110, respectively, and bridge 132 connecting the pair of rims 131 to each other.

Front 130 includes left end portion 130L in its left portion. Left end portion 130L includes a part extending in a direction intersecting a direction (left-right direction) in which the pair of rims 131 and bridge 132 align with each other as well as extending rearward. Also, front 130 includes right end portion 130R in its right portion. Right end portion 130R includes a part extending in a direction intersecting the direction (left-right direction) in which the pair of rims 131 and bridge 132 align with each other as well as extending rearward.

Front 130 includes a pair of nose pad 133 that abuts the nose of a user. Nose pad 133 corresponds to a nose-abutting portion according to the present invention. As shown in FIG. 2, nose pad 133 is a member formed by part of rims 131. However, nose pad 133 may be a member attached to rims 131 or bridge 132 after being formed separately from rims 131. Note that rims 131 themselves or lenses 110 may serve as a nose-abutting portion, part of which abuts the nose of the user.

The material of front 130 is not specifically limited, and is selected appropriately, for example, from metals such as titanium, aluminum, and stainless steel; resins such as polyamide, acetate, celluloid, polyetherimide, and polyurethane; and carbon and the like.

Left temple 140L and right temple 140R are formed in such a way as to have external shapes approximately symmetrical to each other.

One end portion of left temple 140L is rotatably attached to left end portion 130L of front 130 via left hinge 145L. One end portion of right temple 140R is rotatably attached to right end portion 130R of front 130 via right hinge 145R. Here, left hinge 145L and right hinge 145R are examples of a coupling section according to the present invention, and parts whereby the end portions of left temple 140L and right temple 140R are coupled to respective end portions of front 130 are configured to be pivotal, for example. Hereinafter, regarding left temple 140L and right temple 140R, end portions placed on the front side (connected to left hinge 145L and right hinge 145R, respectively) when the user wears electronic glasses 10 will be referred to as front end portions as required. Note that left hinge 145L and right hinge 145R are examples of a coupling section according to the present invention.

The material of the temples is not specifically limited, and is selected appropriately, for example, from resins such as polyamide, acetate, celluloid, polyetherimide, and polyurethane; and carbon and the like.

Power storage section 150 adapted to store electricity and supply electricity to liquid crystal lenses 111 and control section 170 described later is placed in left temple 140L. Power storage section 150 is a secondary battery such as a lithium-ion battery. As power storage section 150, an appropriate one of known apparatuses capable of storing electric power is selected according to electric power and the like needed by electrical devices of the eyewear.

Furthermore, contactless power receiving section 160 is placed in left temple 140L to wirelessly receive electricity from an external contactless power feeding section described later and supply electricity to power storage section 150. Contactless power receiving section 160 includes a non-illustrated coil made of a conductor (e.g., conducting wire) wound around power receiver winding axis 160A.

The type of wireless power feeding between the contactless power feeding section and contactless power receiving section 160 is an electromagnetic induction type that feeds electric power with the two sections being placed close to each other. Thus, contactless power receiving section 160 can be downsized to such an extent as to be able to be placed in left temple 140L and can be mounted in various types of eyewear such as the present electronic glasses 10 without design constraints. Note that according to the present invention, contactless power feeding, which can be the above-mentioned electromagnetic induction type, a magnetic resonance type, or the like, is the act of feeding electric power using a magnetic field without a direct physical contact between a power receiving section and its counterpart, i.e., a power feeding section, via a conducting wire or the like, where the power receiving section is electrically connected to a power storage section.

Contactless power receiving section 160 is placed in an area in left temple 140L and the length between contactless power receiving section 160 and left hinge 145L is shorter than the length between nose pad 133 and left hinge 145L. In other words, contactless power receiving section 160 is closer to left hinge 145L than to nose pad 133 and is placed in the area in left temple 140L. In still other words, when left temple 140L is folded, contactless power receiving section 160 is placed in the area in left temple 140L located between nose pad 133 and left hinge 145L. Note that the term "between nose pad 133 and left hinge 145L" means a range indicated by reference character X in FIG 2.

Placement of contactless power receiving section 160 in such a position provides the advantage of improving weight balance of entire electronic glasses 10 in a front-rear direction, thereby improving a wearing feel and fitting adjustment of electronic glasses 10. Furthermore, in positioning electronic glasses 10 with respect to an eyewear power feeding apparatus described later, the placement described above provides the advantage of being able to ensure that contactless power receiving section 160 will face the contactless power feeding section.

Preferably, contactless power receiving section 160 is placed in an area in left temple 140L located between a center of left lens 100 or left rim 131 in a right-left direction and left hinge 145L when left temple 140L is folded. Note that a range between the center of left lens 100 in the right-left direction and left hinge 145L is indicated by reference character Y in FIG. 2. If power receiver winding axis 160A is located at a distance of 5 mm to 50 mm, both inclusive, from a pivot shaft of left hinge 145L, then contactless power receiving section 160 is located at such a position.

Placement of contactless power receiving section 160 in such a position provides the advantage of further improving weight balance of entire electronic glasses 10 in a front-rear direction, thereby further improving a wearing feel and fitting adjustment of electronic glasses 10. Furthermore, in positioning electronic glasses 10 with respect to the eyewear power feeding apparatus described later, the placement described above provides the advantage of being able to further ensure that contactless power receiving section 160 will face the contactless power feeding section.

Ridges 141 are formed on a left flank of left temple 140L and right flank (lateral surface of electronic glasses 10) of right temple 140R (see FIG. 3). However, the left flank of left temple 140L, i.e., a region in the vicinity of contactless power receiving section 160, has a planar shape. This allows the user to recognize where contactless power receiving section 160 is placed and position electronic glasses 10 appropriately with respect to the eyewear power feeding apparatus described later. Also, when the contactless power feeding section is positioned facing the side of the left flank of left temple 140L, the distance between the contactless power feeding section and contactless power receiving section 160 can be reduced further, improving power transmission efficiency and further reducing the size of contactless power receiving section 160.

Note that if power storage section 150 and contactless power receiving section 160 are placed on the same surface of the same substrate, these devices can be placed compactly.

As shown in FIG. 2, right temple 140R incorporates control section 170 adapted to control liquid crystal lenses 111. Control section 170 includes detection section 171 and a non-illustrated control circuit.

Detection section 171 includes, for example, a capacitive detection pad. As the detection pad, known detection pads used as touch sensors are available for use. When that part of right temple 140R which corresponds to detection section 171 is touched by an object (such as a finger of the user), detection section 171 detects a change in capacitance resulting from the touch.

Control section 170 is electrically connected to the detection pad of detection section 171 and liquid crystal lenses 111. The control circuit of control section 170 controls a voltage applied to liquid crystal lenses 111 and thereby controls optical characteristics of liquid crystal lenses 111. For example, when detection section 171 detects a touch applied by the object, the control circuit changes the refractive index of liquid crystal lenses 111 either by applying a voltage to the pair of liquid crystal lenses 111 or by stopping application of the voltage. That is, detection section 171 is an operating section of liquid crystal lenses 111.

Conduction path components such as non-illustrated flexible substrates are placed between front 130 and lenses 110. The conduction path components electrically interconnect liquid crystal lenses 111, control section 170, and power storage section 150.

As described above, with electronic glasses 10 according the present embodiment, power storage section 150 and contactless power receiving section 160 are placed in left temple 140L while control section 170 having detection section 171 is placed in right temple 140R. This provides the advantage of improving right-left weight balance of entire electronic glasses 10, thereby improving a wearing feel.

Also, control section 170 having power storage section 150, contactless power receiving section 160, and detection section 171 may be placed in either the right or left temple. This placement provides the advantage of being able to achieve simplification by housing lines interconnecting these devices in a single temple.

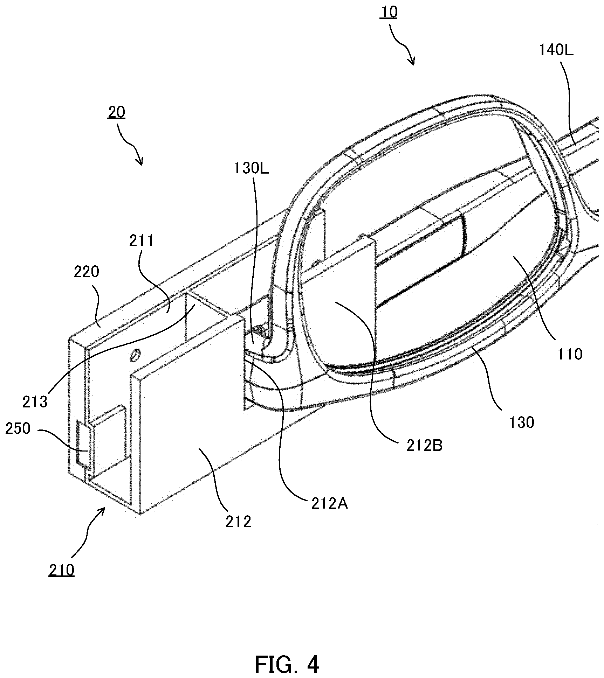

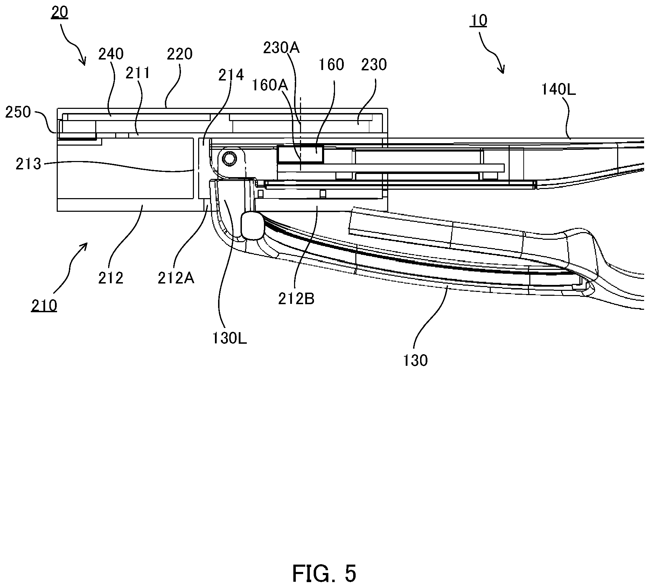

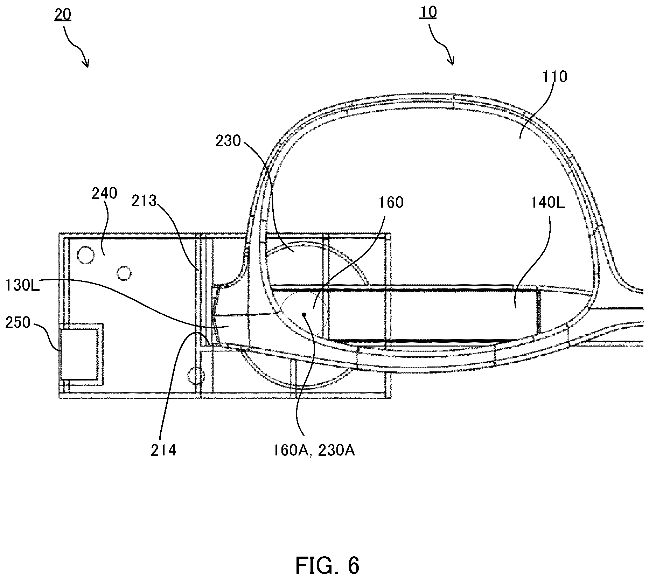

Next, the eyewear power feeding apparatus that supplies electricity to electronic glasses 10 will be described. FIG. 4 is a perspective view of eyewear power feeding apparatus 20 according to an embodiment of the present invention. FIG. 5 is a plan view of eyewear power feeding apparatus 20. FIG. 6 is a front view of the eyewear power feeding apparatus. Theses drawings also show electronic glasses 10 held by eyewear power feeding apparatus 20 positioned upside down. Also, in FIG. 5, front 130 is shown as being partially cut away.

Although terms "vertical direction" and "horizontal direction" are used in the following description, these terms are used to facilitate the understanding of placement locations and orientations of members and are not intended to limit the attitude of eyewear power feeding apparatus 20 in use.

In FIGS. 5 and 6, part of eyewear power feeding apparatus 20 and front part of left temple 140L are shown as being transparent, showing members located inside these parts as well.

Eyewear power feeding apparatus 20 includes positioning section 210, casing 220, and contactless power feeding section 230 that is placed in casing 220.

Positioning section 210 includes first flat plate 211 placed extending in a vertical direction and second flat plate 212 placed parallel to first flat plate 211. Also, positioning section 210 includes third flat plate 213 placed between first flat plate 211 and second flat plate 212 by intersecting first flat plate 211 and second flat plate 212 substantially at right angles and extending in the vertical direction. Furthermore, positioning section 210 includes fourth flat plate 214 placed between first flat plate 211 and second flat plate 212 by extending in a horizontal direction.

Second flat plate 212 is provided with groove 212A extending in the vertical direction from an upper end of second flat plate 212 to at least a position where fourth flat plate 214 is provided. Groove 212A is provided in the vicinity of third flat plate 213. Part of second flat plate 212 located on the opposite side of groove 212A from third flat plate 213 makes up positioning strip 212B. Positioning strip 212B is inserted between folded left temple 140L and front 130.

Casing 220 is substantially identical in shape with first flat plate 211 in front view and is box-shaped with one side open. Casing 220 is attached to an outer surface of first flat plate 211. That is, first flat plate 211 serves as a lid of casing 220.

Contactless power feeding section 230 is placed in casing 220. Contactless power feeding section 230 includes a non-illustrated coil made of a conductor wound around power feeder winding axis 230A.

Contactless power feeding section 230 is placed at such a position as to face positioning strip 212B. Specifically, contactless power feeding section 230 is placed at such a position that power receiver winding axis 160A of a coil in contactless power receiving section 160 and power feeder winding axis 230A of a coil in contactless power feeding section 230 coincide with each other when electronic glasses 10 are positioned by positioning section 210.

Substrate 240 is placed in casing 220 and a non-illustrated control circuit adapted to control contactless power feeding section 230 is placed on substrate 240.

Power receiving connector 250 is provided in one end portion of casing 220. A cable terminal connected to an external power supply is connected to power receiving connector 250. Power receiving connector 250 is connected to the control circuit and contactless power feeding section 230. When the cable terminal is connected to power receiving connector 250, electricity is supplied to contactless power feeding section 230 from outside. Note that the cable terminal and power receiving connector 250 are, for example, a USB terminal and USB socket, respectively.

Electronic glasses 10 are put upside down on eyewear power feeding apparatus 20 configured as described above. In so doing, front end portions of left end portion 130L, left hinge 145L, and left temple 140L are inserted into groove 212A and between first flat plate 211 and second flat plate 212 (positioning strip 212B), and electronic glasses 10 are positioned by positioning section 210.

Specifically, as shown clearly in FIG. 5, positioning strip 212B positions electronic glasses 10 by abutting left end portion 130L of front 130 from the right side in the horizontal direction. Alternatively, second flat plate 212 may carry out positioning by abutting left end portion 130L of front 130 from the left side in the horizontal direction. In so doing, positioning strip 212B or second flat plate 212 functions as a horizontal abutting portion. Thus, horizontal positioning, and more particularly, right-left positioning, of electronic glasses 10 is carried out. Note that positioning strip 212B can position electronic glasses 10 by abutting left end portion 130L of front 130, a front end portion of left hinge 145L, or a front end portion of left temple 140L appropriately according to outline design of electronic glasses 10.

Note that in relation to positioning, the term "abut" herein means that positioning section 210 and any part of electronic glasses 10 abut each other during positioning of electronic glasses 10, and does not limit whether positioning section 210 and electronic glasses 10 remain abutted against each other after the positioning. For example, the term "abut" herein includes a case in which during positioning, positioning strip 212B, second flat plate 212, or the like abuts one end portion of front 130, one end portion of temple 140, or hinge 145, and then the abutment is released. Also, the term "one end portion" herein means one end and a surrounding area thereof. For example, one end portion of temple 140 includes one end of temple 140 and a surrounding area thereof.

Therefore, as shown in FIGS. 5 and 6, the position of contactless power receiving section 160 (power receiver winding axis 160A) in the horizontal direction, and more particularly, in the right-left direction, coincides with the position of contactless power feeding section 230 (power feeder winding axis 230A) in the horizontal direction, and more particularly, in the right-left direction.

Furthermore, as shown clearly in FIG. 5, first flat plate 211 abuts the front end portion of left temple 140L (one end portion) from a rear side in the horizontal direction. In so doing, first flat plate 211 functions as a horizontal abutting portion. Thus, horizontal positioning, and more particularly, front-rear positioning, of electronic glasses 10 is carried out. In this case, because contactless power receiving section 160 placed in left temple 140L is located next to contactless power feeding section 230 via first flat plate 211, contactless power feeding can be carried out efficiently.

Note that first flat plate 211 may position electronic glasses 10 in the front-rear direction by abutting left end portion 130L of front 130, the front end portion of left hinge 145L, or the front end portion of left temple 140L according to the outline design of electronic glasses 10. Also, positioning strip 212B may position electronic glasses 10 in the front-rear direction by abutting left end portion 130L of front 130, the front end portion of left hinge 145L, or the front end portion of left temple 140L according to the outline design of electronic glasses 10.

Also, as shown clearly in FIG. 6, at least one of left end portion 130L of front 130, the front end portion of left hinge 145L, and the front end portion of left temple 140L is put on fourth flat plate 214 and supported by fourth flat plate 214 from vertically below. That is, fourth flat plate 214 abuts the top of at least one of left end portion 130L of front 130, the front end portion of left hinge 145L, and the front end portion of left temple 140L from vertically below. In so doing, fourth flat plate 214 functions as a support portion. Thus, vertical positioning of electronic glasses 10 is carried out. Note that a determination as to which of left end portion 130L of front 130, the front end portion of left hinge 145L, and the front end portion of left temple 140L will be supported by fourth flat plate 214 is made appropriately according to the outline design of electronic glasses 10.

Therefore, as shown in FIG. 6, the vertical position of contactless power receiving section 160 (power receiver winding axis 160A) placed in left temple 140L coincides with the vertical position of contactless power feeding section 230 (power feeder winding axis 230A) placed in casing 220.

Note that if one attempts to insert right end portion 130R, right hinge 145R, and right temple 140R into groove 212A and between first flat plate 211 and second flat plate 212, right temple 140R interferes with third flat plate 213. Thus, third flat plate 213 prevents contactless power receiving section 160 from entering a faulty state in which contactless power receiving section 160 does not face contactless power feeding section 230, i.e., a state in which at least one of right end portion 130R, right hinge 145R, and right temple 140R is supported by fourth flat plate 214. That is, third flat plate 213 functions as an erroneous-support prevention portion.

As can be seen from the above description, eyewear power feeding apparatus 20 can hold electronic glasses 10 while positioning electronic glasses 10 in place using positioning section 210. In so doing, contactless power receiving section 160 is positioned accurately with respect to contactless power feeding section 230. Thus, even if contactless power receiving section 160 and contactless power feeding section 230 are relatively small, wireless power feeding can be carried out reliably between the two sections.

Since contactless power receiving section 160 can be made relatively small, contactless power receiving section 160 can be placed in left temple 140L. This eliminates design constraints on electronic glasses 10.

Also, since contactless power feeding section 230 can be made relatively small, eyewear power feeding apparatus 20 can be downsized. Furthermore, this eliminates design constraints on eyewear power feeding apparatus 20.

Since eyewear power feeding apparatus 20 is suitable for feeding electric power wirelessly to electronic glasses 10 in this way, if eyewear power feeding apparatus 20 and electronic glasses 10 are combined into an eyewear set, convenience of electronic glasses 10 can be improved.

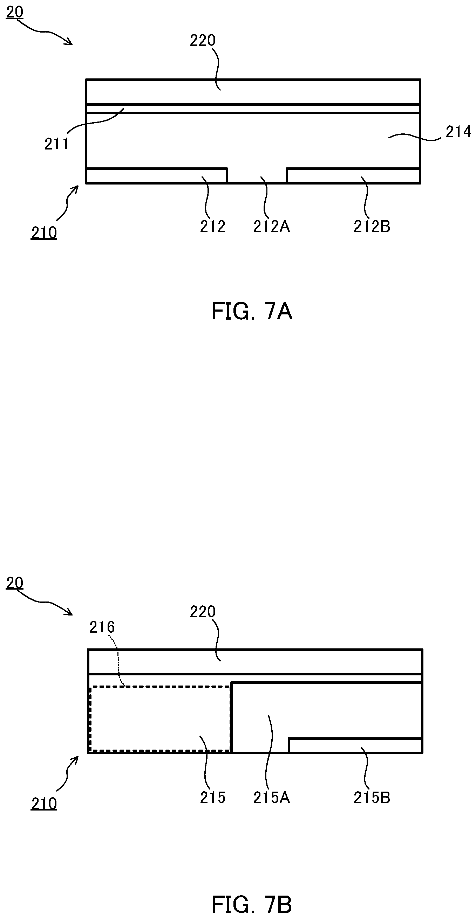

Plan views of variations of eyewear power feeding apparatus 20 are shown in FIGS. 7A to 7D.

Eyewear power feeding apparatus 20 shown in FIG. 7A corresponds to eyewear power feeding apparatus 20 shown in FIGS. 4 to 6 except that third flat plate 213 has been removed.

Eyewear power feeding apparatus 20 configured in this way can also hold electronic glasses 10 with contactless power receiving section 160 being positioned in such a way as to face contactless power feeding section 230 as with eyewear power feeding apparatus 20 shown in FIGS. 4 to 6.

Eyewear power feeding apparatus 20 shown in FIG. 7B includes abutting member 215 as positioning section 210, abutting member 215 having the shape of a rectangular parallelepiped block provided with L-shaped groove 215A in planar view. Positioning section 210 includes positioning strip 215B next to groove 215A.

Eyewear power feeding apparatus 20 configured in this way can also hold electronic glasses 10 with contactless power receiving section 160 being positioned in such a way as to face contactless power feeding section 230 as with eyewear power feeding apparatus 20 shown in FIGS. 4 to 6. Furthermore, a block portion indicated by reference numeral 216 in FIG. 7B functions as an erroneous-support prevention portion. Thus, eyewear power feeding apparatus 20 can prevent electronic glasses 10 from being positioned without contactless power receiving section 160 and contactless power feeding section 230 facing each other.

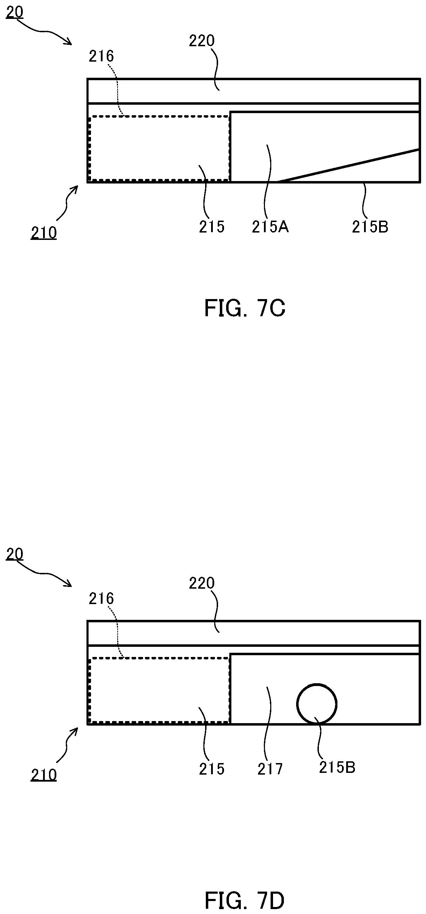

Eyewear power feeding apparatus 20 shown in FIG. 7C differs from eyewear power feeding apparatus 20 shown in FIG. 7B only in the shapes of groove 215A and positioning strip 215B. That is, positioning strip 215B has an external shape formed as a right triangle in planar view. Also, groove 215A has a pentagonal shape in planar view, i.e., a shape resulting from removing a right triangle from a rectangle.

Eyewear power feeding apparatus 20 configured in this way can also hold electronic glasses 10 with contactless power receiving section 160 being positioned in such a way as to face contactless power feeding section 230 as with eyewear power feeding apparatus 20 shown in FIGS. 4 to 6. Furthermore, a block portion indicated by reference numeral 216 in FIG. 7C functions as an erroneous-support prevention portion. Thus, eyewear power feeding apparatus 20 can prevent electronic glasses 10 from being positioned without contactless power receiving section 160 and contactless power feeding section 230 facing each other.

Eyewear power feeding apparatus 20 shown in FIG. 7D differs from eyewear power feeding apparatus 20 shown in FIG. 7B only in the configuration of a part in which groove 215A and positioning strip 215B are placed. That is, positioning section 210 of eyewear power feeding apparatus 20 includes offset surface 217, rectangular in planar view, at a position offset a predetermined distance from an upper end of a solid rectangular block. Furthermore, positioning strip 215B, columnar in shape, is provided extending vertically upward from offset surface 217. Offset surface 217 functions as a support portion.

Eyewear power feeding apparatus 20 configured in this way can also hold electronic glasses 10 with contactless power receiving section 160 being positioned in such a way as to face contactless power feeding section 230 as with eyewear power feeding apparatus 20 shown in FIGS. 4 to 6. Furthermore, a block portion indicated by reference numeral 216 in FIG. 7D functions as an erroneous-support prevention portion. Thus, eyewear power feeding apparatus 20 can prevent electronic glasses 10 from being positioned without contactless power receiving section 160 and contactless power feeding section 230 facing each other.

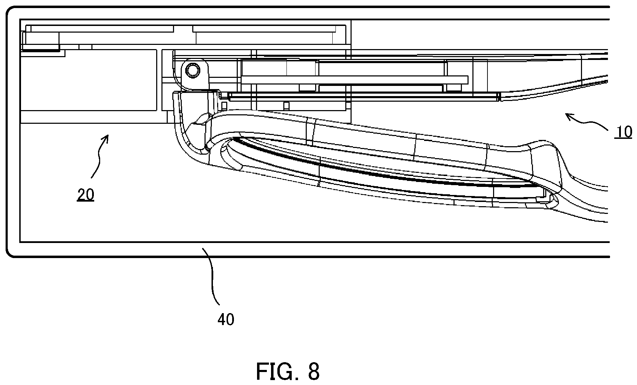

Eyewear power feeding apparatus 20 shown in FIGS. 4 to 7D may be provided, for example, in a spectacle case. FIG. 8 is a plan view of spectacle case 40 having eyewear power feeding apparatus 20. Although not illustrated in FIG. 8, an openable and closable lid portion of the case is provided on the near side of spectacle case 40 in FIG. 8.

Spectacle case 40 is used to store electronic glasses 10, and eyewear power feeding apparatus 20 is provided in spectacle case 40. The shape of spectacle case 40 is substantially rectangular in planar view. As shown in FIG. 8, eyewear power feeding apparatus 20 is fixed, for example, to one of the four corners of rectangular spectacle case 40.

Although not illustrated, a power receiving connector of eyewear power feeding apparatus 20 is placed by being exposed on an outer surface of spectacle case 40.

A method for charging electronic glasses 10 using spectacle case 40 is, for example, as follows. Electronic glasses 10 are positioned and held by positioning section 210 (see FIGS. 4 to 7D) of eyewear power feeding apparatus 20 provided in spectacle case 40. When a non-illustrated lid portion of spectacle case 40 is closed in this state, electronic glasses 10 are housed in a positioned state in spectacle case 40. As described above, when electronic glasses 10 are positioned by eyewear power feeding apparatus 20, contactless power receiving section 160 (see FIG. 3 and the like) of electronic glasses 10 is positioned accurately with respect to contactless power feeding section 230 (see FIG. 5 and the like). Thus, when a cable terminal connected to an external power supply is connected to a power receiving connector provided in the outer surface of spectacle case 40, wireless power feeding is carried out reliably with electronic glasses 10 protected by spectacle case 40.

Note that although eyewear power feeding apparatus 20 is fixed to a corner of spectacle case 40 in the example shown in FIG. 8, the present invention is not limited to this. For example, if eyewear power feeding apparatus 20 shown in FIGS. 4 to 7D is configured to be attachable/detachable to/from spectacle case 40, by feeding electric power wirelessly to electronic glasses using only eyewear power feeding apparatus 20 or making power receiving connector 250 of eyewear power feeding apparatus 20 connectable to terminal or the like provided in spectacle case 40, wireless power feeding may be enabled with the electronic glasses housed in spectacle case 40. In either case, eyewear power feeding apparatus 20 can be placed at such a position in spectacle case 40 that electronic glasses 10 can be housed in spectacle case 40 after being positioned. Also, for example, one end portion of eyewear power feeding apparatus 20 may be rotatably coupled to an inner surface of spectacle case 40 via a non-illustrated hinge or the like. In this case, eyewear power feeding apparatus 20 can make transitions between a first state in which eyewear power feeding apparatus 20 has not turned from spectacle case 40 via a hinge and a second state in which eyewear power feeding apparatus 20 has turned from spectacle case 40. With such spectacle case 40, electronic glasses 10 are put on eyewear power feeding apparatus 20 in the first state, eyewear power feeding apparatus 20 is returned to the second state with electronic glasses 10 kept on eyewear power feeding apparatus 20, and consequently, for example, electronic glasses 10 can be housed easily in spectacle case 40.

Although in the example shown in FIG. 8, power feeding to eyewear power feeding apparatus 20 is carried out via power receiving connector provided in the outer surface of spectacle case 40, the present invention is not limited to this. A storage battery adapted to feed electric power to eyewear power feeding apparatus 20 may be provided, for example, in spectacle case 40 together with eyewear power feeding apparatus 20.

Now, with electronic glasses 10 shown in FIGS. 1 to 3, temples are rotatably attached to respective end portions of front 130 via respective hinges (left hinge 145L and right hinge 145R). However, as another form of electronic glasses 10, a form may be adopted, in which the temples are coupled to front 130 without rotation. When this form is adopted, electronic glasses 10 are not provided with the hinges (left hinge 145L and right hinge 145R) shown in FIGS. 1 and 2, and the temples remain unfolded as shown in FIG. 2. In such a case, the parts in which the temples are coupled to respective end portions of front 130 become examples of a coupling section according to the present invention.

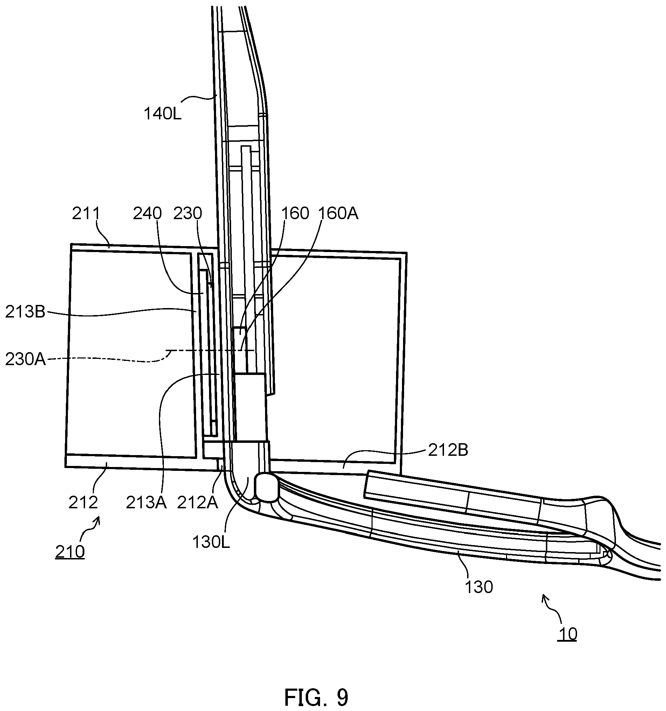

Description will be given below of a variation of eyewear power feeding apparatus 20 adapted to feed electric power to electronic glasses 10 by being positioned with respect to electronic glasses 10 whose temples are kept unfolded. FIG. 9 is a plan view showing a variation of eyewear power feeding apparatus 20 adapted to feed electric power to electronic glasses 10 whose temples are unfolded.

In FIG. 9, as with FIGS. 4 to 6, electric power is fed to electronic glasses 10 held by being positioned upside down. Eyewear power feeding apparatus 20 shown in FIG. 9 has positioning strip 213A at such a position as to abut unfolded left temple 140L when electronic glasses 10 are positioned by positioning strip 212B of positioning section 210. Positioning strip 213A just has to be able to abut unfolded left temple 140L of electronic glasses 10 suitably and does not necessarily have to be provided in such a way as to intersect first flat plate 211 and second flat plate 212 substantially at right angles.

Between first flat plate 211 and second flat plate 212, third flat plate 213B is provided substantially parallel to positioning strip 213A. Contactless power feeding section 160 and substrate 240 are placed between positioning strip 213A and third flat plate 213B. More specifically, when electronic glasses 10 are positioned by positioning strip 212B of positioning section 210, contactless power feeding section 230 is placed at such a position that power receiver winding axis 160A of a coil in contactless power receiving section 160 and power feeder winding axis 230A of a coil in contactless power feeding section 230 coincide with each other. Although not illustrated, a control circuit adapted to control contactless power feeding section 230 may be provided on substrate 240.

Note that although an example in which positioning strip 213A and third flat plate 213B are constructed integrally is shown in FIG. 9, positioning strip 213A and third flat plate 213B may be constructed separately. In that case, it is sufficient that contactless power feeding section 160 and substrate 240 are placed between positioning strip 213A and third flat plate 213B constructed separately.

Electronic glasses 10 whose temples are kept unfolded are put upside down on eyewear power feeding apparatus 20 configured as described above. In so doing, the front end portions of left end portion 130L and left temple 140L are inserted into groove 212A and between first flat plate 211 and second flat plate 212 (positioning strip 212B). In this state, an outer surface of left temple 140L abuts positioning strip 213A. Consequently, electronic glasses 10 are positioned suitably by positioning section 210.

As can be seen from the above description, eyewear power feeding apparatus 20 can also hold electronic glasses 10 whose temples are kept unfolded while positioning electronic glasses 10 in place using positioning section 210. In so doing, contactless power receiving section 160 is positioned accurately with respect to contactless power feeding section 230. Thus, even if contactless power receiving section 160 and contactless power feeding section 230 are relatively small, wireless power feeding can be carried out reliably between the two sections.

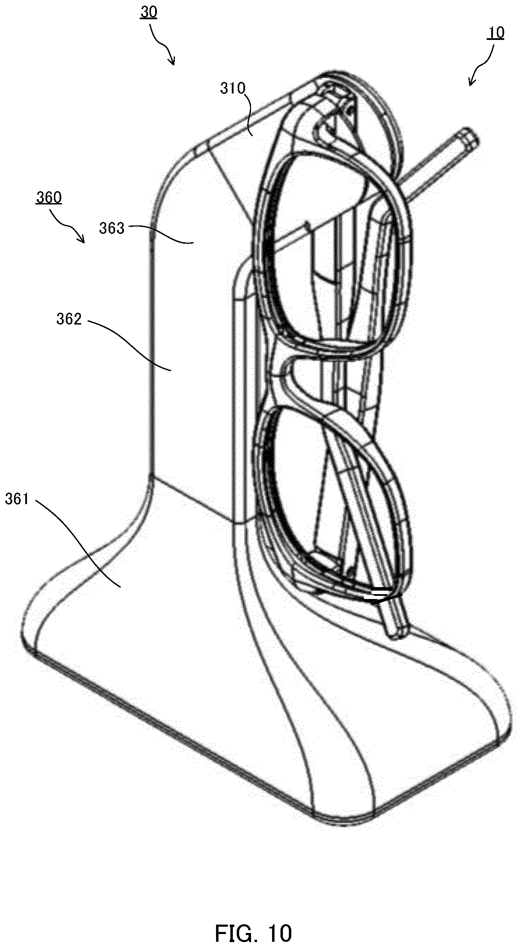

Next, an eyewear power feeding apparatus according another embodiment of the present invention will be described. FIG. 10 is a perspective view of eyewear power feeding apparatus 30 according to another embodiment. FIG. 10 also shows electronic glasses 10 positioned and held on eyewear power feeding apparatus 30. As shown in FIG. 10, eyewear power feeding apparatus 30 positions and holds electronic glasses 10 with the left side of electronic glasses 10 facing vertically upward.

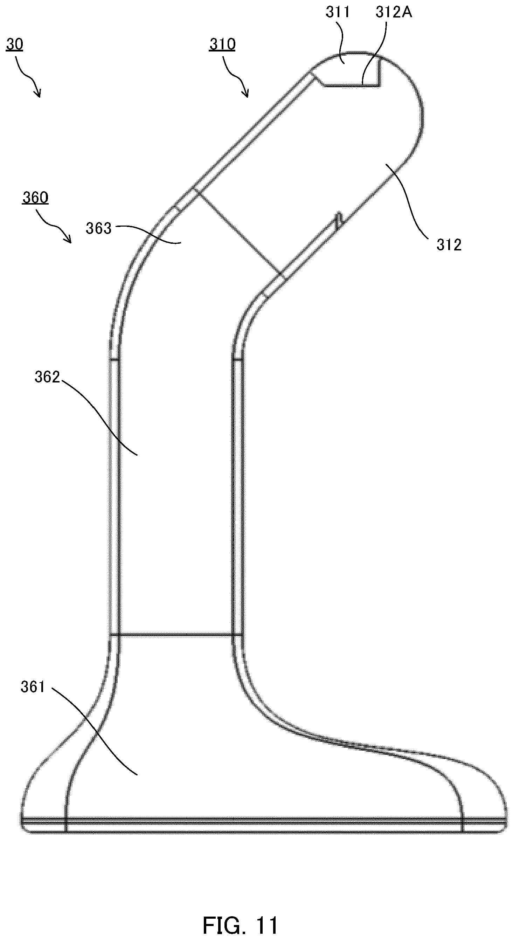

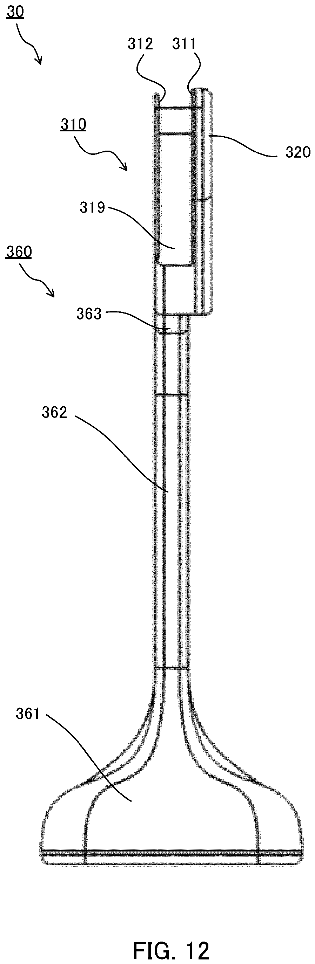

FIG. 11 is a front view of eyewear power feeding apparatus 30. FIG. 12 is a right side view of eyewear power feeding apparatus 30.

Eyewear power feeding apparatus 30 includes positioning section 310, casing 320, and strut 360.

Positioning section 310 includes first flat plate 311 extending in the vertical direction, and second flat plate 312 placed parallel to first flat plate 311. Second flat plate 312 has notched portion 312A in an upper end portion. Notched portion 312A has three planes: a vertical plane, a horizontal plane, and an inclined plane. Also, positioning section 310 has spacer 319 between first flat plate 311 and second flat plate 312 to restrict a distance between first flat plate 311 and second flat plate 312 to a predetermined value.

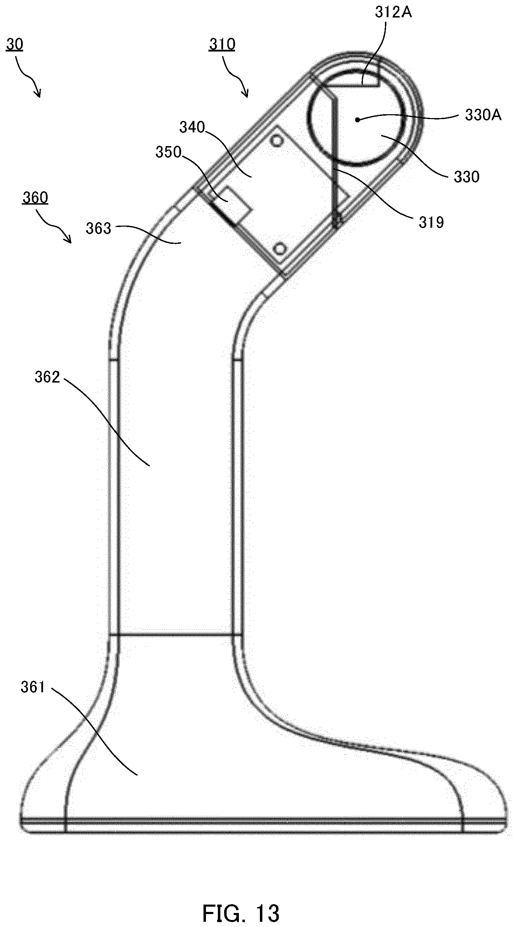

FIG. 13 is a partial cut-away front view of eyewear power feeding apparatus 30, revealing positioning section 310. As shown in FIG. 13, spacer 319 has a vertical plane.

When electronic glasses 10 are positioned by positioning section 310, left temple 140L of electronic glasses 10 are inserted between first flat plate 311 and second flat plate 312. Also, second flat plate 312 is inserted between folded left temple 140L and front 130, and functions as positioning strip as described in detail later.

Casing 320 is substantially identical in shape with first flat plate 311 in front view and is box-shaped with one side open. Casing 320 is attached to an outer surface of first flat plate 311. That is, first flat plate 311 serves as a lid of casing 320.

As shown in FIG. 13, contactless power feeding section 330 is placed in casing 320. Contactless power feeding section 330 includes a non-illustrated coil made of a conductor wound around power feeder winding axis 330A.

Contactless power feeding section 330 is placed at such a position as to face second flat plate 312 (positioning strip). Specifically, when electronic glasses 10 are positioned by positioning section 310, contactless power feeding section 330 is placed at such a position that power receiver winding axis 160A of a coil in contactless power receiving section 160 and winding axis 330A of a coil in contactless power feeding section 330 coincide with each other.

Substrate 340 is placed in casing 320 and a non-illustrated control circuit adapted to control contactless power feeding section 330 is placed on substrate 340.

Power receiving connector 350 is provided in one end portion of casing 320. A cable terminal connected to an external power supply is connected to power receiving connector 350. Power receiving connector 350 is connected to the control circuit and contactless power feeding section 330. When the cable terminal is connected to power receiving connector 350, electricity is supplied to contactless power feeding section 330 from outside. Note that the cable terminal and power receiving connector 350 are, for example, a USB terminal and USB socket, respectively.

Strut 360 includes base portion 361, vertical portion 362, and sloped portion 363 in order from bottom to top. Strut 360 supports positioning section 310 and casing 320 at a predetermined height from the surface on which eyewear power feeding apparatus 30 is placed, with positioning section 310 spaced away from vertical portion 362 by a predetermined distance in the horizontal direction. Note that the shape of strut 360 is not limited to the illustrated one.

By being hung with the left side of electronic glasses 10 facing vertically upward, electronic glasses 10 are put on eyewear power feeding apparatus 30 configured as described above. In so doing, left end portion 130L is inserted into notched portion 312A and the front end portion of left temple 140L is inserted between first flat plate 311 and second flat plate 312, and consequently electronic glasses 10 are positioned by positioning section 310.

Specifically, the vertical plane of notched portion 312A abuts left end portion 130L of front 130 from the right side in the horizontal direction. In so doing, second flat plate 312 (positioning strip) functions as a horizontal abutting portion. Thus, horizontal positioning, and more particularly, right-left positioning, of electronic glasses 10 is carried out. Note that the vertical plane of notched portion 312A can abut left end portion 130L of front 130, the front end portion of left hinge 145L, or the front end portion of left temple 140L appropriately according to the outline design of electronic glasses 10.

Therefore, the position of contactless power receiving section 160 (power receiver winding axis 160A) in the horizontal direction, and more particularly, in the right-left direction, coincides with the position of contactless power feeding section 330 (power feeder winding axis 330A) in the horizontal direction, and more particularly, in the right-left direction.

Furthermore, first flat plate 311 abuts the front end portion of left temple 140L from the rear side in the horizontal direction. In so doing, first flat plate 311 functions as a horizontal abutting portion. Thus, horizontal positioning, and more particularly, front-rear positioning, of electronic glasses 10 is carried out. In this case, because contactless power receiving section 160 placed in left temple 140L is located next to contactless power feeding section 230 via first flat plate 311, contactless power feeding can be carried out efficiently.

Note that first flat plate 311 may position electronic glasses 10 in the front-rear direction by abutting left end portion 130L of front 130, the front end portion of left hinge 145L, or the front end portion of left temple 140L according to the outline design of electronic glasses 10. Also, second flat plate 312 (positioning strip) may position electronic glasses 10 in the front-rear direction by abutting left end portion 130L of front 130, the front end portion of left hinge 145L, or the front end portion of left temple 140L according to the outline design of electronic glasses 10.

Also, left end portion 130L of front 130 is put on the horizontal plane of notched portion 312A and supported by the horizontal plane from vertically below. That is, second flat plate 312 is a part that hangs electronic glasses 10 whose left temple 140L is folded and the horizontal plane abuts a side face of left end portion 130L on the side of nose pad 133 from vertically below. In so doing, second flat plate 312 (positioning strip) functions as a support portion. Thus, vertical positioning of electronic glasses 10 is carried out. Note that a determination as to which of left end portion 130L of front 130, the front end portion of left hinge 145L, and the front end portion of left temple 140L will be supported by second flat plate 312 (positioning strip) is made appropriately according to the outline design of electronic glasses 10.

Therefore, the vertical position of contactless power receiving section 160 (power receiver winding axis 160A) placed in left temple 140L coincides with the vertical position of contactless power feeding section 330 (power feeder winding axis 330A) placed in casing 320.

Note that if one attempts to insert right end portion 130R into notched portion 312A and insert right temple 140R between first flat plate 311 and second flat plate 312, a rear end portion of left temple 140L interferes with the vertical plane of spacer 319. Thus, spacer 319 prevents contactless power receiving section 160 from entering a faulty state in which contactless power receiving section 160 does not face contactless power feeding section 330, i.e., a state in which at least one of right end portion 130R, right hinge 145R, and right temple 140R is supported by second flat plate 312 from vertically below. That is, spacer 319 functions as an erroneous-support prevention portion.

Note that the sloped plane of notched portion 312A has a function to guide left end portion 130L of front 130 at appropriate position in inserting left end portion 130L into notched portion 312A.

As can be seen from the above description, eyewear power feeding apparatus 30 can position and hold electronic glasses 10 in place using positioning section 310. In so doing, contactless power receiving section 160 is positioned accurately with respect to contactless power feeding section 330. Thus, even if contactless power receiving section 160 and contactless power feeding section 330 are relatively small, wireless power feeding can be carried out reliably between the two sections.

Contactless power receiving section 160, which can be made relatively small, can be placed in left temple 140L. This almost eliminates design constraints on electronic glasses 10.

Also, since contactless power feeding section 330 can be made relatively small, eyewear power feeding apparatus 30 can be downsized. Furthermore, design constraints on eyewear power feeding apparatus 30 are almost eliminated.

Since eyewear power feeding apparatus 30 is suitable for feeding electric power wirelessly to electronic glasses 10 in this way, if eyewear power feeding apparatus 30 and electronic glasses 10 are combined into an eyewear set, convenience of electronic glasses 10 can be improved.

Also, positioning section 310 and casing 320 may be designed to be removable from strut 360. This will make positioning section 310 and casing 320 easy to carry out. Consequently, electronic glasses 10 will become easy to charge in places away from home or other similar places.

Embodiments of the present invention have been described above, but the present invention is not limited to the embodiments described above, and various changes can be made without departing from the spirit of the present invention. For example, the eyewear according to the present invention includes glasses (including electronic glasses and sunglasses) and goggles equipped with an auxiliary mechanism for improvement of users' eyesight, such as vision correction lenses. Also, the eyewear according to the present invention includes various devices (e.g., spectacle type wearable terminals or head mount displays) equipped with a mechanism for presenting information to the user's field of vision or eyes.

Also, it is sufficient that the eyewear according to the present invention is configured to be able to hold an auxiliary mechanism for eyesight or field-of-vision improvement, mechanism for information presentation, or other mechanism in front of or around the user's eyes. The eyewear according to the present invention is not limited to a spectacle type able to be hooked over both ears, and may be a type mounted on the head or hooked over one ear. Besides, the eyewear according to the present invention is not limited to a binocular eyewear, and may be a monocular eyewear.

Also, examples of electrical devices include an imaging apparatus, sound recording apparatus, lighting apparatus, image display apparatus, and projection apparatus. The electrical devices may be attached to frame components such as the front or temples, but may be attached to the lenses.

Also, the eyewear power feeding apparatus may have a power storage/power feed section on a substrate, where the power storage/power feed section is connected to a power receiving connector and capable of storing electricity. The power storage/power feed section supplies electricity to a contactless power feeding section when a cable terminal is not connected to the power receiving connector. Thus, by being equipped with such a power storage/power feed section, the eyewear power feeding apparatus can supply electricity to the eyewear, even when the eyewear is not connected to an external power supply.

Also, the contactless power feeding section may be incorporated in a positioning strip. This makes it possible to make the configuration of the eyewear power feeding apparatus more compact, and thereby increase flexibility of outline design.

The disclosure of Japanese Patent Application No. 2017-181494, filed on September 21, 2017, including the specification, drawings and abstract, is incorporated herein by reference in its entirety.

### Industrial Applicability

The present invention is suitable for use as an eyewear equipped with electrical devices, an eyewear power feeding apparatus capable of feeding electric power wirelessly to the eyewear, and an eyewear set, which is a set of the eyewear and eyewear power feeding apparatus.

### Reference Signs List

- 10: Electronic glasses
- 110: Lens
- 111: Liquid crystal lens
- 120: Frame
- 130: Front
- 130L: Left end portion
- 130R: Right end portion
- 131: Rim
- 132: Bridge
- 133: Nose pad
- 140L: Left temple
- 140R: Right temple
- 141: Ridge
- 145L: Left hinge
- 145R: Right hinge
- 150: Power storage section
- 160: Contactless power receiving section
- 160A: Power receiver winding axis
- 170: Control section
- 171: Detection section
- 20, 30: Eyewear power feeding apparatus
- 210, 310: Positioning section
- 211, 311: First flat plate
- 212, 312: Second flat plate
- 212A, 215A: Groove
- 212B, 215B: Positioning strip
- 213: Third flat plate
- 214: Fourth flat plate
- 215: Abutting member
- 216: Block portion
- 217: Offset surface
- 220, 320: Casing
- 230, 330: Contactless power feeding section
- 230A, 330A: Power feeder winding axis
- 240, 340: Substrate
- 250, 350: Power receiving connector
- 312A: Notched portion
- 319: Spacer
- 360: Strut
- 361: Base portion
- 362: Vertical portion
- 363: Sloped portion
- 40: Spectacle case

## Claims

1. An eyewear, comprising:
a front having a nose-abutting portion;
a temple coupled to a first end portion of the front at a first end portion of the temple via a coupling section;
an electrical device;
a power storage section that supplies electricity to the electrical device;
a contactless power receiving section that supplies electricity to the power storage section,
wherein the contactless power receiving section is placed in a region in the temple, and
wherein a length between the contactless power receiving section and the coupling section is shorter than a length between the nose-abutting portion and the coupling section.

2. The eyewear according to claim 1, further comprising a lens held by the front.

3. The eyewear according to claim 2, wherein the lens includes the electrical device.

4. The eyewear according to claim 2, wherein the lens is a liquid crystal lens.

5. The eyewear according to any one of claims 1 to 4,
wherein the coupling section is a hinge, and
wherein the first end portion of the temple is pivotally coupled to the first end portion of the front via the hinge.

6. The eyewear according to claim 5, further comprising:
a second temple pivotally coupled to a second end portion of the front at a first end portion of the second temple via a second hinge; and
an operating section used to operate the electrical device, wherein
the operating section is placed in an area in the second temple.

7. The eyewear according to claim 5, further comprising an operating section used to control the electrical device, wherein
the operating section is placed in an area in the temple.

8. The eyewear according to any one of claims 1 to 7,
wherein the contactless power receiving section includes a coil, and
wherein a distance between the coupling section and a winding axis of the coil is 5 mm to 50 mm, both inclusive.

9. An eyewear power feeding apparatus, comprising:
a positioning section that positions an eyewear which includes a temple incorporating a contactless power receiving section, and a front coupled to a first end portion of the temple at a first end portion of the front via a coupling section; and
a contactless power feeding section, wherein
the positioning section positions the eyewear such that the contactless power receiving section faces the contactless power feeding section, by abutting at least one of the first end portion of the temple, the coupling section, and the first end portion of the front.

10. The eyewear power feeding apparatus according to claim 9,
wherein the coupling section is a hinge, and
wherein the first end portion of the temple is pivotally coupled to the first end portion of the front via the hinge.

11. The eyewear power feeding apparatus according to claim 9 or 10, wherein the positioning section includes a positioning strip, and positions the eyewear by abutting the positioning strip against at least one of the first end portion of the temple, the coupling section, and the first end portion of the front.

12. The eyewear power feeding apparatus according to any one of claims 9 to 11, wherein the positioning section includes a horizontal abutting portion, and carries out horizontal positioning of the eyewear by abutting the horizontal abutting portion against at least one of the first end portion of the temple, the coupling section, and the first end portion of the front from a horizontal direction.

13. The eyewear power feeding apparatus according to any one of claims 9 to 11, wherein the positioning section includes a support portion, and carries out vertical positioning of the eyewear by supporting at least one of the first end portion of the temple, the coupling section, and the first end portion of the front from vertically below.

14. The eyewear power feeding apparatus according to claim 13,
wherein the eyewear includes a second temple coupled to a second end portion of the front at a first end portion of the second temple via a second coupling section, and
wherein the eyewear power feeding apparatus further comprises an erroneous-support prevention portion that prevents at least one of the first end portion of the second temple, the second coupling section, and the second end portion of the front from being supported by the support portion.

15. The eyewear power feeding apparatus according to claim 13 or 14, wherein the support portion abuts a top of at least one of the first end portion of the temple, the coupling section, and the first end portion of the front from vertically below, with the eyewear being placed upside down.

16. The eyewear power feeding apparatus according to claim 13 or 14,
wherein the support portion is a part that hangs the eyewear in which the temple is folded, and
wherein the support portion abuts the coupling section or a side face of the first end portion of the front which is on a side of a nose-abutting portion from vertically below.

17. The eyewear power feeding apparatus according to claim 16, further comprising a strut that supports the positioning section and the contactless power feeding section.

18. The eyewear power feeding apparatus according to any one of claims 9 to 17, further comprising a power storage section that supplies stored electricity to the contactless power feeding section.

19. An eyewear set, comprising the eyewear according to any one of claims 1 to 8; and the eyewear power feeding apparatus according to any one of claims 9 to 18.
